# EUROPEAN PATENT SPECIFICATION

(11) **EP 2 848 168 B1**
(45) Date of publication and mention of the grant of the patent: **11.01.2017**
(21) Application number: 14178835.6
(22) Date of filing: 28.07.2014
(51) Int. Cl.: A47J 31/42, A47J 43/046, A47J 42/50

(54) **Automatic distributor for dispensing espresso coffee starting from coffee-beans and relative method**
Automat zur Abgabe von Espresso ausgehend von Kaffeebohnen und Verfahren
Distributeur automatique de distribution de café espresso à partir de café en grains et la méthode relative

(30) Priority: 13.09.2013 IT PR20130069
(43) Date of publication of application: 18.03.2015
(73) Proprietor: Ducale Macchine da Caffe' di Sandei Ugo E.C. S.N.C., 43122 Parma (IT)
(72) Inventor: SANDEI, Pietro, 43122 Parma (IT); SANDEI, Stefano, 43122 PARMA (IT)
(74) Representative: Gotra, Stefano

(56) References cited:
- US-A1- 2004 025 703
- US-A1- 2010 199 848
- US-A1- 2011 073 690

## Description

The object of the present invention is a device for dispensing espresso coffee starting from coffee beans and the method thereof. In particular, the dispensing device and the procedure proposed herein find use in the automatic dispensing machine sector, also known as the "vending machine" sector. Moreover, the device and the method find use in any automatic machine for the preparation of coffee.

According to the prior art, a device for dispensing espresso coffee starting from coffee beans comprises the following essential elements:
- a hopper for holding the coffee beans;
- a grinder-doser for dosing and grinding a pre-established amount of coffee beans;
- an infusing and dispensing unit suitable for processing the ground coffee into a beverage;
- a control unit.

Such a machine is known from US2004/0025703 Upon a request for dispensing coffee, the control unit enables the transfer of a pre-established amount of coffee beans from the hopper for holding the coffee beans to the underlying grinder-doser.

Disadvantageously, the coffee beans inside the coffee bean hopper are in contact with the air, which compromises the aroma and organoleptic characteristics thereof. In fact, prolonged exposure to air (and thus to oxygen and moisture) causes the oil in the coffee to go rancid and alters the composition of the volatile constituents of the aroma of the coffee. This alteration is due to both direct oxidation caused by contact with the oxygen in the air and indirect oxidation owing to the effect of the peroxides generated, in turn, by oxidation of the oil in the coffee.

The absorption of moisture also promotes the development of microorganisms, ketonic rancidity of the fats and enzymatic reactions.

This is more pronounced the more the dispensing machine is left inactive for long periods of time. As a result, the espresso coffee dispensed will prove to be of poor quality even if it is obtained from high quality beans.

Moreover, there are automatic coffee dispensing machines that use capsules, that is, single-dose containers of ground coffee, packaged in the place of origin in a protected atmosphere. Preserving ground coffee inside capsules prevents exposure to air, but it is not without drawbacks.

First of all, the quality of the dispensed coffee starting from capsules is definitely inferior, compared to the quality of freshly ground coffee. In fact, the aroma of coffee is released more fully during the grinding process.

Furthermore, systems using capsules involve high costs for packaging, storage, freight and disposal. Disposal of the used capsules also poses environmental issues.

In this context, the technical task underlying the present invention is to offer a device for dispensing espresso coffee starting from coffee beans and the method thereof, which overcome the above-mentioned drawbacks of the prior art.

In particular, the aim of the present invention is to offer a device for dispensing espresso coffee starting from coffee beans and the method thereof, wherein deterioration over time of the organoleptic characteristics and the aroma of the coffee is prevented or limited, while also avoiding additional costs with respect to prior art solutions.

A further aim of the present invention is to make available a device for dispensing espresso coffee starting from coffee beans and the method thereof, wherein contamination of the coffee by external agents is reduced or eliminated.

The defined technical task and the specified aims are substantially achieved by a device for dispensing espresso coffee starting from coffee beans and the method thereof, comprising the technical characteristics stated in one or more of the appended claims.

Further characteristics and advantages of the present invention will emerge more clearly from the approximate and thus non-limiting description of a preferred but not exclusive embodiment of a device for dispensing espresso coffee starting from coffee beans and the method thereof, as illustrated in the accompanying drawings, of which:

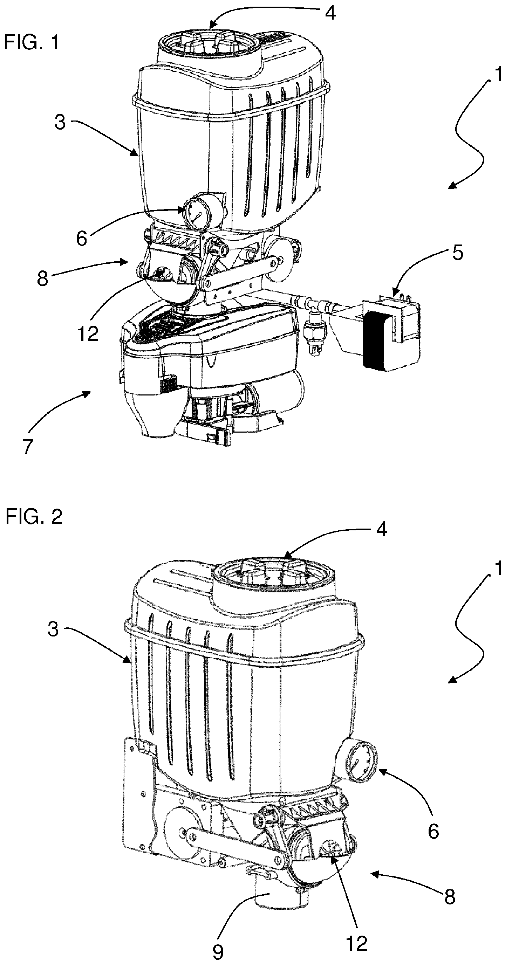

- figure 1 is a perspective view of a device for dispensing espresso coffee starting from coffee beans, according to the present invention;
- figures 2, 3 and 4 are different perspective views of the dispensing device appearing in figure 1, and where some parts have been omitted for the sake of clarity.

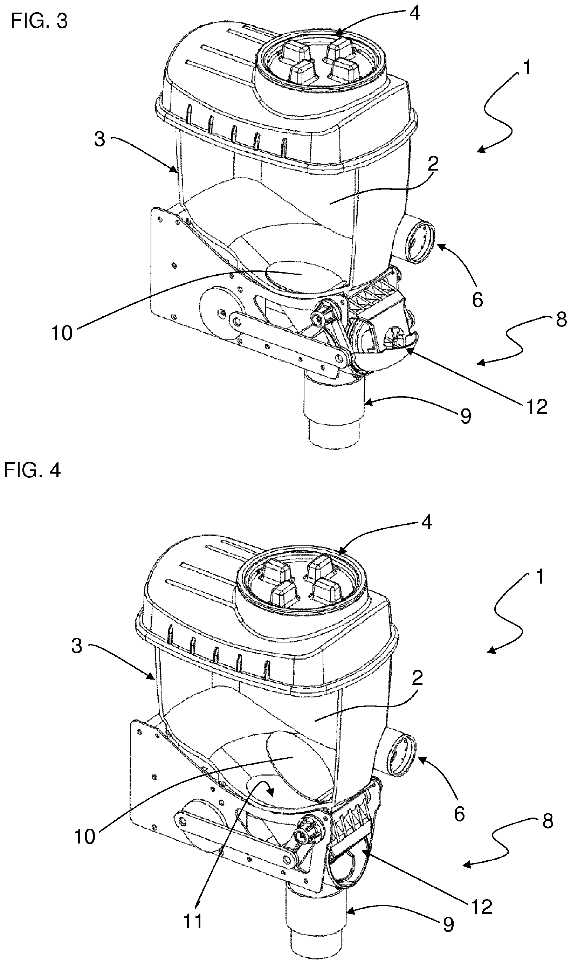

With reference to the figures, a device for dispensing espresso coffee starting from coffee beans or seeds is indicated by the number 1. The coffee beans are stored inside a containment tank 2. In particular, the containment tank 2 is a volume of space delimited by a box-like body 3 equipped with a hermetically sealing lid 4 (see figures 3 and 4).

Originally, a vacuum pump 5 is provided that is operatively active on the containment tank 2 containing the coffee-beans so as to create a vacuum therein. An instrument for measuring pressure or a vacuum gauge 6 is associated with the containment tank 2. In particular, the vacuum gauge 6 is operatively active on the containment tank 2 for measuring the air pressure therein.

The dispensing device 1 further comprises grinding means 7 for grinding the coffee beans and a dosing means 8 that are operative active between the containment tank 2 and the grinding means 7 so as to transfer a pre-established amount of coffee beans from the containment tank 2 to the grinding means 7.

The dispensing device 1 further comprises an infusing and dispensing unit (not illustrated) that is operatively active on the coffee ground by the grinding means 7 so as to process it into a beverage.

The grinding means 7 and the infusing and dispensing unit are both of a known type and thus they will not be described in further detail.

As shown in the figures, the containment tank 2 is located above the grinding means 7. The containment tank 2 is preferably in the form of a hopper so as to facilitate descent by gravity of the coffee beans towards the underlying grinding means 7.

The dispensing device 1 comprises a processing and control unit (not illustrated) that is operatively active on the dosing means 8 so as to control the transfer of the pre-established amount of coffee beans from the containment tank 2 to the grinding means 7. In particular, the processing and control unit is configured to set the pre-established amount of coffee beans and to time the transfer thereof from the containment tank 2 to the grinding means 7. In the embodiment described and illustrated herein, the dosing means 8 comprises a dosing chamber 11 that selectively communicates with the containment tank 2 and with the grinding means 7.

The intermediate chamber 11 preferably communicates with the grinding means 7 by means of a tubular element 9. For example, the tubular element 9 is telescopic so as to define a further dosing chamber that has a variable volume; said volume being set according to the required amount of coffee beans. The selective communication between the intermediate chamber 11 and the containment tank 2 is realised by means of a door 10.

In particular, the door 10 can be configured between a first position for allowing the passage of coffee beans from the containment tank 2 to the intermediate chamber 11, and a second position in which such passage is stopped.

The selective communication between the intermediate chamber 11 and the tubular element 9 is realised by means of a hermetically sealing valve 12. In particular, in the preferred embodiment, the hermetically sealing valve 12 is driven by a geared motor (not illustrated) controlled by the processing and control unit.

The pre-established amount of coffee beans is preferably set based on the utilisation of the dispensing device 1 so that the overall daily demand for espresso coffee is met.

The same processing and control unit is also operatively active on the vacuum pump 5 so as to activate it whenever the pressure in the containment tank 2 detected by the vacuum gauge 6 drops below a predetermined threshold.

The amount of coffee beans remaining inside the containment tank 2 is determined by the processing and control unit based on the amount of coffee beans that have been previously ground.

In an alternative embodiment, a sensor is provided which detects the amount of coffee beans present within the containment tank 2. For example, the sensor consists of a photocell.

The dispensing device 1 is insertable inside an automatic dispensing machine or an automatic machine.

The method for preparing espresso coffee starting from coffee beans is described below.

First of all, coffee beans are inserted inside the containment tank 2 through the lid 4 located at the top of the box-like body 3. During this step, the door 10 is found in the first position, thus allowing passage of the coffee beans into the underlying dosing chamber (see figure 4), while the hermetically sealing valve 12 is in the closed configuration, thereby preventing passage of the coffee beans to the tubular element 9 and thus to the grinding means 7. In this step, the coffee seeds pass from the containment tank 2 to the dosing chamber 11.

The processing and control unit then activates the vacuum pump 5 so as to create a vacuum inside the containment tank 2.

The transfer of the pre-established amount of coffee beans from the dosing chamber 11 to the tubular element 9 takes place whenever the coffee beans are depleted in the latter. For example, the pre-established amount of coffee beans is adjusted according to the mean daily consumption of the dispensing device 1.

To do this, the hermetically sealing valve 12 passes into an open configuration so that the portion of coffee beans descends from the dosing chamber 11 to the tubular element 9 and thus to the grinding means 7, and the door 10 is brought to the second position so that the dosing chamber 11 proves to be closed at the top.

Once the tubular element 9 is filled, the hermetically sealing valve 12 is brought back to the closed position and the door 10 is brought back to the first position (figure 4) so that the dosing chamber 11 proves to be open at the top.

At this point, the vacuum pump 5 is activated again, so as to recreate the vacuum inside the containment tank 2.

Each time a cup of coffee is requested, a portion of the coffee beans is transferred to a grinding station where a grinding means 7 is active. The ground coffee then passes to the infusing and dispensing unit, which processes it into a beverage (espresso coffee).

When the amount of coffee beans remaining in the containment tank 2 is less than a predetermined value, a signal is sent to the user indicating the need to insert more coffee beans.

The characteristics of the device for dispensing espresso coffee starting from coffee beans and the method thereof, according to the present invention, prove to be clear from the description, as do the advantages thereof.

In particular, the creation of a vacuum in the containment tank makes it possible to preserve the aroma and the organoleptic characteristics of the coffee beans. In fact, the oily components of the coffee expand, and the volatile aromas bind to the oils and are released upon grinding.

In this manner, espresso coffee of excellent quality is obtained without complicating the structure of the dispensing device.

Moreover, the creation of the vacuum blocks the development of aerobic microorganisms, preserves freshness and provides protection from contamination and external odours.

These advantages are backed up by laboratory analyses, in which samples of coffee seeds have been compared, including samples of coffee seeds kept under a vacuum in the containment tank and samples of coffee seeds kept in a non-protected environment (that is, not under a vacuum) for the same period of time.

For example, following a period of 20 days, the organoleptic characteristics showed definite deterioration in the case of the coffee seeds placed in a non-protected environment, compared to the coffee seeds placed under a vacuum, which showed organoleptic characteristics similar to those of seeds kept in a sealed package.

## Claims

1. Device (1) for dispensing espresso coffee starting from coffee-beans, comprising:
a tank (2) for containing the coffee-beans;
grinding means (7) for coffee-beans, said tank (2) being located above the grinding means (7);
dosing means (8) that are operatively active between the containment tank (2) and the grinding means (7) for transferring a pre-established quantity of coffee-beans from the containment tank (2) to said grinding means (7);
at least a vacuum pump (5) operatively active on the containment tank (2) of the coffee-beans for creating vacuum therein,
**characterised in that** said dosing means (8) comprise a dosing chamber (11) that selectively communicates with said containment tank (2) and with said grinding means (7), the device (1) further comprising a door (10) that can be configured between an opening position for allowing the passage of coffee-beans from the containment tank (2) to said dosing chamber (11), and a closing position for interrupting said passage.

2. Dispensing device (1) according to claim 1, further comprising an infusing and and dispensing group that is operatively active on the coffee grinded by said grinding means (7) for processing it in beverage.

3. Dispensing device (1) according to claim 1, further comprising a tubular element (9) placed between said dosing chamber (11) and said grinding means (7).

4. Dispensing device (1) according to claim 3, wherein said tubular element (9) is telescopic in such a way as to define a further dosing chamber that has a variable volume.

5. Dispensing device (1) according to claim 1 or 3 or 4, further comprising a tight-sealed valve (12) for establishing the selective communication between said dosing chamber (11) and said tubular element (9).

6. Dispensing device (1) according to any of the previous claims, further comprising an instrument for measuring the pressure or vacuum gauge (6) that is operatively active on said containment tank (2) for measuring the air pressure therein.

7. Dispensing device (1) according to any of the previous claims, further comprising a processing and driving unit that is operatively active on said dosing means (8) for managing the conveyance of said pre-established quantity of coffee-beans from the containment tank (2) to the grinding means (7).

8. Dispensing device (1) according to claim 7, wherein said processing and driving unit is configured to set said pre-established quantity of coffee-beans and for timing its conveyance from the contaiment tank (2) to the grinding means (7).

9. Automatic distributor comprising a dispensing device (1) according to any of the previous claims.

10. Method for preparing espresso coffee starting from coffee-beans, comprising the following steps:
introducing coffee-beans in a containment tank (2);
transferring a pre-established quantity of coffee-beans from said containment tank (2) to a dosing chamber (11);
transferring a portion of coffee-beans from said dosing chamber (11) to a grinding station;
grinding the coffee portion arrived at the grinding station;
creating vacuum within said containment tank (2), wherein said step of creating vacuum within the containment tank (2) occurs after the step of introducing coffee-beans in the containment tank (2) and after the step of transferring the pre-established quantity of coffee-beans from the containment tank (2) to the dosing chamber (11).

## Patentansprüche

1. Vorrichtung (1) zur Abgabe von Espresso, ausgehend von Kaffeebohnen, umfassend:
einen Behälter (2) zum Enthalten der Kaffeebohnen;
Mahlmittel (7) für Kaffeebohnen, wobei der Behälter (2) über den Mahlmitteln (7) angeordnet ist;
Dosiermittel (8), die betriebswirksam zwischen dem Behälter (2) und den Mahlmitteln (7) wirken, um eine vorgegebene Menge an Kaffeebohnen vom Behälter (2) zu den Mahlmitteln (7) zu transferieren;
mindestens eine Vakuumpumpe (5), die betriebswirksam auf den Behälter (2) für die Kaffeebohnen wirkt, um ein Vakuum darin zu erzeugen,
**dadurch gekennzeichnet, dass** die Dosiermittel (8) eine Dosierkammer (11) umfassen, die selektiv mit dem Behälter (2) und den Mahlmitteln (7) kommuniziert, wobei die Vorrichtung (1) zudem eine Tür (10) umfasst, die zwischen einer Öffnungsposition, um den Übergang der Kaffeebohnen vom Behälter (2) zur Dosierkammer (11) zu erlauben, und einer Schließposition, um diesen Übergang zu unterbrechen, konfiguriert werden kann.

2. Abgabevorrichtung (1) nach Anspruch 1, zudem umfassend eine Brüh- und Abgabegruppe, die betriebswirksam auf den von den Mahlmitteln (7) gemahlenen Kaffee wirkt, um diesen in ein Getränk zu verwandeln.

3. Abgabevorrichtung (1) nach Anspruch 1, zudem umfassend ein Rohrelement (9), das zwischen der Dosierkammer (11) und den Mahlmitteln (7) platziert ist.

4. Abgabevorrichtung (1) nach Anspruch 3, wobei das Rohrelement (9) teleskopisch ist, sodass es eine weitere Dosierkammer definiert, die ein variables Volumen besitzt.

5. Abgabevorrichtung (1) nach Anspruch 1 oder 3 oder 4, zudem umfassend ein abgedichtetes Ventil (12), um die selektive Kommunikation zwischen der Dosierkammer (11) und dem Rohrelement (9) herzustellen.

6. Abgabevorrichtung (1) nach einem der vorhergehenden Ansprüche, zudem umfassend ein Instrument zum Messen des Drucks oder Vakuummessgerät (6), das betriebswirksam auf dem Behälter (2) wirkt, um den Luftdruck darin zu messen.

7. Abgabevorrichtung (1) nach einem der vorhergehenden Ansprüche, zudem umfassend eine Verarbeitungs- und Antriebseinheit, die betriebswirksam auf die Dosiermittel (8) wirkt, um das Fördern der vorgegebenen Menge an Kaffeebohnen vom Behälter (2) zu den Mahlmitteln (7) zu steuern.

8. Abgabevorrichtung (1) nach Anspruch 7, wobei die Verarbeitungs- und Antriebseinheit ausgelegt ist, um die vorgegebene Menge an Kaffeebohnen festzulegen und die Zeit für deren Förderung vom Behälter (2) zu den Mahlmitteln (7) einzustellen.

9. Automat zur Abgabe, umfassend eine Abgabevorrichtung (1) nach einem der vorhergehenden Ansprüche.

10. Verfahren zur Herstellung von Espresso, ausgehend von Kaffeebohnen, umfassend die folgenden Schritte:
Einführen von Kaffeebohnen in einen Behälter (2);
Transferieren einer vorgegebenen Menge an Kaffeebohnen vom Behälter (2) zur Dosierkammer (11);
Transferieren einer Portion Kaffeebohnen von der Dosierkammer (11) zu einer Mahlstation;
Mahlen der von der Mahlstation eingegangenen Kaffeeportion;
Erzeugen eines Vakuums im Behälter (2), wobei der Schritt zum Erzeugen des Vakuums im Behälter (2) nach dem Schritt zum Einführen von Kaffeebohnen in den Behälter (2) und nach dem Schritt zum Transferieren der vorgegebenen Menge an Kaffeebohnen vom Behälter (2) zur Dosierkammer (11) stattfindet.

## Revendications

1. Dispositif (1) de distribution de café espresso à partir de café en grains, comprenant :
- un réservoir (2) servant à contenir les grains de café ;
un moyen servant à moudre (7) les grains de café, ledit réservoir (2) étant situé au-dessus du moyen servant à moudre (7) ;
des moyens de dosage (8) étant fonctionnellement actifs entre le réservoir de contenance (2) et le moyen servant à moudre (7) pour transférer une quantité prédéfinie de grains de café du réservoir de contenance (2) au dit moyen servant à moudre (7) ;
au moins une pompe à vide (5) fonctionnellement active sur le réservoir de contenance (2) des grains à moudre pour créer le vide dans celui-ci, **caractérisé en ce que** lesdits moyens de dosage (8) comprennent une chambre de dosage (11) qui communique de façon sélective avec ledit réservoir de contenance (2) et avec ledit moyen servant à moudre (7), le dispositif (1) comprenant de plus une porte (10) pouvant être configurée entre une position d'ouverture pour permettre le passage des grains de café du réservoir de contenance (2) à ladite chambre de dosage (11), et une position de fermeture pour interrompre ledit passage.

2. Dispositif de distribution (1) selon la revendication 1, comprenant de plus un groupe d'infusion et de distribution étant fonctionnellement actif sur le café moulu par ledit moyen servant à moudre (7) pour le transformer en une boisson.

3. Dispositif de distribution (1) selon la revendication 1, comprenant de plus un élément tubulaire (9) placé entre ladite chambre de dosage (11) et ledit moyen servant à moudre (7).

4. Dispositif de distribution (1) selon la revendication 3, dans lequel ledit élément tubulaire (9) est télescopique de manière à définir une chambre de dosage supplémentaire ayant un volume variable.

5. Dispositif de distribution (1) selon les revendications 1 ou 3 ou 4, comprenant de plus une vanne étanche (12) servant à établir la communication sélective entre ladite chambre de dosage (11) et ledit élément tubulaire (9).

6. Dispositif de distribution (1) selon l'une quelconque des revendications précédentes, comprenant de plus un instrument servant à mesurer la pression ou un indicateur de vide (6) étant fonctionnellement actif sur ledit réservoir de contenance (2) pour mesurer la pression de l'air dans celui-ci.

7. Dispositif de distribution (1) selon l'une quelconque des revendications précédentes, comprenant de plus une unité de traitement et d'entraînement étant fonctionnellement active sur lesdits moyens de dosage (8) pour gérer le transport de ladite quantité prédéfinie de grains de café du réservoir de contenance (2) au moyen servant à moudre (7).

8. Dispositif de distribution (1) selon la revendication 7, dans lequel ladite unité de traitement et d'entraînement est configurée pour déterminer ladite quantité prédéfinie de grains de café et pour synchroniser son transport du réservoir de contenance (2) au moyen servant à moudre (7).

9. Distributeur automatique comprenant un dispositif de distribution (1) selon l'une quelconque des revendications précédentes.

10. Procédé de préparation d'un café espresso à partir de grains de café, comprenant les étapes suivantes :
introduire les grains de café dans un réservoir de contenance (2) ;
transférer une quantité prédéfinie de grains de café dudit réservoir de contenance (2) vers une chambre de dosage (11) ;
transférer une dose de grains de café de ladite chambre de dosage (11) à un poste servant à moudre ;
moudre la dose de café parvenue au poste servant à moudre ;
créer un vide à l'intérieur dudit réservoir de contenance (2), dans lequel ladite étape consistant à créer le vide à l'intérieur du réservoir de contenance (2) se déroule après l'étape consistant à introduire les grains de café dans le réservoir de contenance (2) et après l'étape consistant à transférer la quantité prédéfinie de grains de café du réservoir de contenance (2) à la chambre de dosage (11).
